# FASCICULE DE BREVET EUROPEEN

(11) **EP 2 677 477 B1**
(45) Date de publication et mention de la délivrance du brevet: **01.02.2017**
(21) Numéro de dépôt: 13003001.8
(22) Date de dépôt: 12.06.2013
(51) Int. Cl.: G06K 19/077, G06K 7/10, B60C 23/00, B60C 23/04

(54) **Dispositif de communication d'un système de surveillance des roues d'un véhicule et procédé de communication**
Kommunikationsvorrichtung eines Reifenüberwachungssystems eines Fahrzeugs, und entsprechendes Kommunikationsverfahren
Communication device of a system for monitoring the wheels of a vehicle and communication method

(30) Priorité: 22.06.2012 FR 1255960
(43) Date de publication de la demande: 25.12.2013
(73) Titulaire: LDL Technology, 31520 Ramonville Saint Agne (FR)
(72) Inventeur: Bracq, Manuel, 06600 Antibes (FR); Lefaure, Philippe, 31450 Montbrun Lauragais (FR)
(74) Mandataire: Richebourg, Michel François

(56) Documents cités:
- EP-A1- 0 875 405
- US-A- 4 609 905
- US-A- 4 911 217

## Description

### DOMAINE D'APPLICATION DE L'INVENTION

La présente invention a trait au domaine de la surveillance des roues de véhicule et notamment aux adaptations permettant d'améliorer la communication entre les différents sous-ensembles fonctionnels constituant ledit système.

### DESCRIPTION DE L'ART ANTÉRIEUR

Il existe aujourd'hui des pneumatiques qui accueillent dans leur gomme même, des puces électroniques contenant une mémoire unique capable d'être lue par un équipement. Ces puces sont capables de stocker des données mais aussi de les restituer lorsqu'elles sont interrogées. L'avantage pour lès fabricants de pneumatiques est de pouvoir assurer la traçabilité d'un pneumatique, identifier ses rechapages, les dates auxquelles ont été faits les entretiens et de tenter de mieux surveiller la mise en service de pneumatiques de contrefaçon.

Un problème lié à l'exploitation de ces puces réside dans le suivi et la localisation de ces pneumatiques qui peuvent être déplacés d'une jante à l'autre au cours d'une opération de maintenance mais aussi dans la localisation de la roue équipée sur le véhicule en cours d'utilisation. En effet, les usures des pneumatiques ne sont pas toutes semblables en particulier sur un poids lourd et varient selon la position affectée à la roue sur le véhicule.

Actuellement, pour résoudre un tel inconvénient, il existe des dispositifs de communication, tel celui décrit dans le document US 4609905, comprenant des antennes bobinées (exploitant généralement des basses fréquences autour de 125 Khz), fixées au châssis du véhicule au voisinage des passages de roues, ces antennes étant reliées à une électronique de bord capable de les piloter. Ces antennes interrogent la puce électronique intégrée au pneumatique qui répond en transmettant les données relatives au pneumatique en question. Le pneumatique est alors identifié et localisé dans cet exemple, mais cela impose la présence d'un système électronique complet coûteux et lourd à installer sur le véhicule sans compter la fragilité des antennes exposées dans les passages de roues. De plus, ce système s'appuyant sur une puce dite passive (non alimentée par pile) doit être muni d'une antenne faisant le tour du pneumatique afin dé couvrir les trois cent soixante (360) degrés d'angle et être toujours accessible à la communication avec les antennes fixées au châssis pendant la rotation de la roue. Cette solution est donc coûteuse en requérant une antenne par roue et un calculateur embarqué dédié à cette application, complexe à installer et fragile.

Les dispositifs décrits dans les documents EP0875405 et US4911217 proposent l'exploitation de l'armature des pneumatiques comme moyen d'émission et de réception à des fins de communication avec l'extérieur et ne proposent pas de solution de communication entre un module électronique logé dans la roue et la puce associée au pneumatique.

### DESCRIPTION DE L'INVENTION

Partant de cet état de fait, la demanderesse a mené des recherches visant à proposer une solution de communication permettant de résoudre les problèmes de l'art antérieur.

Ces recherches ont abouti à la conception d'un système de surveillance des roues d'un véhicule, le système comprenant un dispositif de communication, ledit dispositif comprenant un module électronique et au moins une desdites roues, ladite roue étant équipée d'un pneumatique comportant une puce électronique et une structure métallique, ledit système étant remarquable en ce que ledit module électronique est logé dans la roue du véhicule, ledit module électronique émettant des ondes sur une gamme de fréquences établie pour permettre la réflexion desdites ondes sur la structure métallique, de façon à ce que lesdites ondes puissent atteindre ladite puce quelle que soit sa position par rapport au module afin que le module puisse correspondre avec la puce à des fins d'activation et/ou de transmission de données pour écriture et/ou lecture.
Cette caractéristique va permettre une lecture en temps réel et en mouvement des paramètres du pneumatique issu de ladite puce, comme par exemple son identifiant. Cette communication est rendue possible par le fait que les ondes qui n'arriveraient pas directement vers leurs objectifs sont réfléchies du fait de leur nature jusqu'à ce qu'elles soient reçues. Ce mode de transmission par réflexion multi-chemins permet de supprimer les opérations fastidieuses visant à réduire au maximum la distance entre ladite puce et ledit module équipant initialement la roue à des fins de mesure des paramètres de pression et/ou de température à l'intérieur du pneumatique, ce type d'appairage n'étant jamais simple dans le cas de roues de poids lourds par exemple. Cette caractéristique permet ainsi de réduire la taille de l'antenne de l'émetteur-récepteur et d'en abaisser ainsi le coût de fabrication.

Un autre avantage est le fait de pouvoir suivre l'historique du pneumatique, connaître son temps de roulage, connaître les références des pneumatiques utilisés et authentifier leur provenance, etc...

L'utilisation de la structure du pneumatique assure non seulement la réflexion de l'onde mais également le confinement de cette dernière évitant toute perturbation extérieure.

Ainsi selon une autre caractéristique, ladite gamme de fréquences se situe au-delà de 100 MHz, gamme de fréquences susceptible d'être utilisée à l'extérieur des pneumatiques pour d'autres applications, mais qui ne seront pas perturbées du fait du confinement du champ de propagation de l'onde.
Selon une autre caractéristique particulièrement avantageuse de l'invention, ladite puce effectue des mesures dynamiques du pneumatique dans lequel elle est implantée. Le message transmis au module contient alors des paramètres liés à l'usure mesurée. Selon une autre caractéristique, ladite puce est une radio étiquette.

En donnant une possibilité supplémentaire d'émission et de réception d'ondes au module équipant les roues tels ceux faisant partie d'un système de surveillance des roues, le dispositif de l'invention permet de répondre aux problèmes de l'art antérieur sans nécessiter de réseau de communication parallèle.

Plusieurs procédés de communication ont été imaginés sur la base de tout ou partie des caractéristiques ci-dessus décrites. Ainsi, un autre objet de l'invention est un procédé de travail dudit dispositif. Selon une caractéristique particulièrement avantageuse, ledit procédé de communication basé sur un dispositif comprenant un récepteur de radiofréquence associé au châssis du véhicule, consiste à faire activer par le module électronique, ladite puce afin que cette dernière communique avec le récepteur de radio-fréquence associé au châssis. Le module électronique vient illuminer la puce et c'est le récepteur associé au châssis qui démodule le signal émis par ladite puce. Le module électronique n'est donc pas alors équipé d'un moyen de lecture du signal émis par la puce ce qui réduit le coût de l'installation.

Selon une autre caractéristique particulièrement avantageuse, le procédé de communication du dispositif du type de celui intégrant un module électronique portable d'interrogation exploité par un utilisateur est remarquable en ce qu'il consiste sous la commande de l'utilisateur, à faire envoyer par le module portable, un signal au module électronique de roue pour commander l'émission d'ondes d'activation de la puce qui émet son identifiant. Cet identifiant peut selon le procédé ci-dessus décrit être transmis audit module de réception. Un tel procédé rend volontaire cette transmission et ne requiert pas de stratégie d'émission dépendante d'un événement de la vie du pneumatique ou de la roue.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif conforme à l'invention.

### BRÈVE DESCRIPTION DES DESSINS

La figure 1 est un dessin schématique d'un camion équipé d'un dispositif de surveillance de la pression de pneumatique et de pneumatiques équipés de marqueur RFID;
La figure 1a illustre les communications possibles entre les différents sous ensembles d'émission et de réception du camion de la figure 1 ;
La figure 2 est un dessin schématique d'une roue équipée d'un module et d'une puce;
La figure 3 est un schéma illustrant les procédés de communication de l'invention.

### DESCRIPTION DES MODES DE RÉALISATION PRÉFÉRÉS

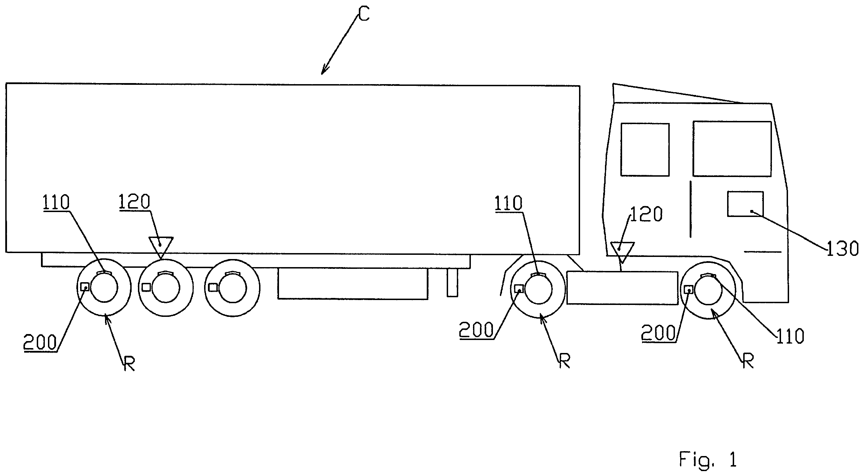

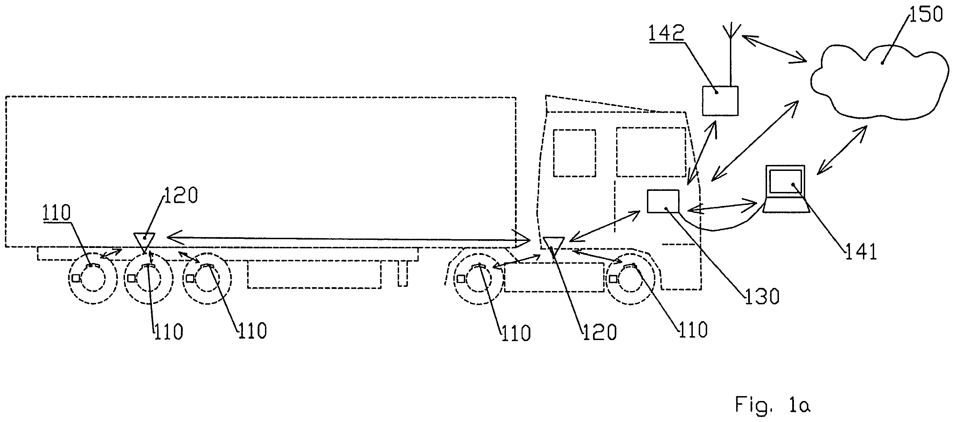

Tel qu'illustré sur les dessins des figures 1 et la, le véhicule C est équipé d'un dispositif de surveillance de la pression des pneumatiques constitué par des modules de prises de mesure 110 fixés à chaque roue R et communiquant avec des unités de réception 120 fixées au châssis du véhicule C, lesquelles communiquent avec une unité centrale de réception 130. Cette unité centrale de réception 130 est elle susceptible de communiquer sans fil ou avec fil avec un ordinateur 141, une antenne relais 142, ou avec tout moyen de connexion à un réseau 150 de type GSM, GPS etc.

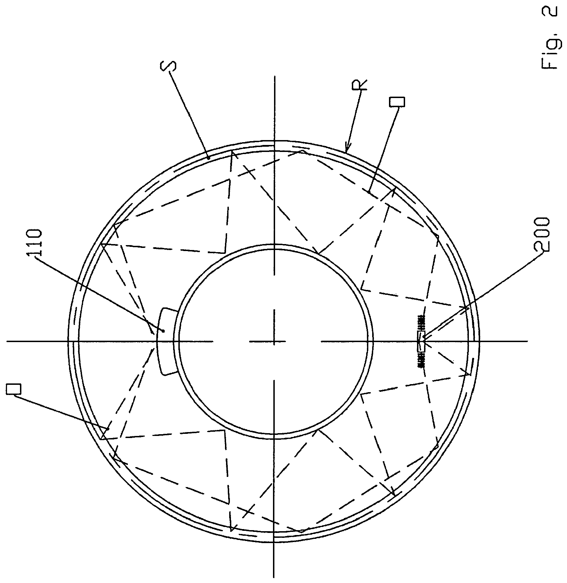

Comme illustrées sur le dessin de la figure 2, les roues R reçoivent des pneumatiques portant des puces ou identifiants de type marqueur RFID 200. Selon un mode de réalisation préféré mais non limitatif, les modules de prise de mesure 110 sont fixés à la jante et les puces 200 sont noyées dans l'épaisseur de gomme constituant le flanc du pneumatique. La position de la puce 200 par rapport au module de prise de mesure importe peu du fait du dispositif de l'invention. Le module de prise de mesure peut être collé sur le pneumatique, bridé sur la jante ou fixé à la valve.

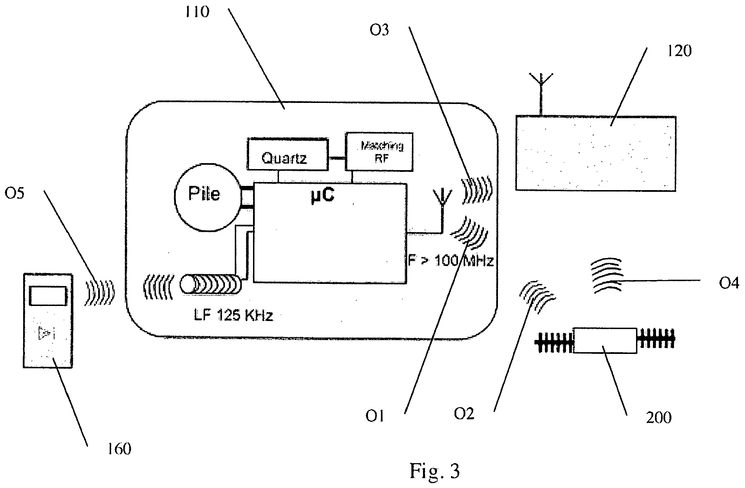

Comme illustré sur le dessin de la figure 3, selon un premier procédé de communication, afin que les identifiants et/ou les données (mesure de l'usure par exemple) associés aux identifiants des puces 200 soient transmis dans la trame de communication des modules de prise de mesure 110, le dispositif de l'invention propose que les données associées à l'identifiant et/ou l'identifiant du pneumatique soient transmis au module de prise de mesure 110 à des fins de stockage ou transmission au module de réception 120, au moyen d'une communication symbolisées par la succession d'émissions O1, 02, 03. Conformément à l'invention, l'activation et/ou la communication du module 110 avec la puce 200 est réalisé au moyen d'ondes se réfléchissant sur la structure métallique S (cf. figure 2) du pneumatique.

Pour ce faire, ledit module 110 comprend des moyens d'émission et de réception d'ondes radios situées au-delà de 100 MHz pour la communication avec la puce 200 et des moyens d'émission et de réception d'ondes radios situés en basse fréquence pour la communication avec le module de réception 120 ou 130. De plus, afin de garantir que les ondes seront émises et reçues dans toutes les directions, ledit module est équipé d'une antenne isotrope.

Selon un autre mode de réalisation d'un procédé de communication, le module électronique 110 active par l'onde symbolisée par O1 (qui n'est alors qu'une onde d'activation) ladite puce afin que cette dernière communique (ondes 04) avec le récepteur de radio fréquence 120 associé au châssis du véhicule. Le module de roue 120 n'a plus alors besoin d'être équipé d'un démodulateur.

Selon un autre mode de réalisation d'un procédé de communication susceptible de déclencher les deux premiers, un module portable d'interrogation 160 envoie sous la commande de son utilisateur, un signal (05) au module électronique de roue 110 pour commander l'émission d'ondes d'activation (01) de la puce qui émet son identifiant (02 ou 04).

On comprend que le dispositif et le procédé, qui viennent d'être ci-dessus décrits et représentés, l'ont été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Système de surveillance des roues d'un véhicule (C), le système comprenant un dispositif de communication, ledit dispositif comprenant un module électronique et au moins une desdites roues, ladite roue (R) étant équipée d'un pneumatique comportant une puce électronique (200) et une structure métallique (S), **CARACTÉRISÉ PAR LE FAIT QUE** ledit module électronique (110) est logé dans la roue (R) du véhicule (C), ledit module électronique (110) émettant des ondes (O) sur une gamme de fréquences établie pour permettre la réflexion desdites ondes sur la structure métallique (S),de façon à ce que lesdites ondes (O) puissent atteindre ladite puce (200) quelle que soit sa position par rapport au module (110) afin que le module (110) puisse correspondre avec la puce (200) à des fins d'activation et/ou de transmission de données pour écriture et/ou lecture.

2. Dispositif selon la revendication 1, **CARACTÉRISÉ PAR LE FAIT QUE** ladite gamme de fréquences se situe au-delà de 100 MHz.

3. Dispositif selon la revendication 1, **CARACTÉRISÉ PAR LE FAIT QUE** ladite puce (200) effectue des mesures dynamiques du pneumatique dans lequel elle est implantée.

4. Dispositif selon la revendication 1, **CARACTÉRISÉ PAR LE FAIT QUE** ladite puce (200) est une radio étiquette.

5. Dispositif selon la revendication 1, **CARACTÉRISÉ PAR LE FAIT QU'**il comprend un récepteur de radiofréquence (120) associé au châssis du véhicule (C).

6. Dispositif selon la revendication 1, **CARACTÉRISÉ PAR LE FAIT QUE** ledit module (110) comprend des moyens d'émission et de réception d'ondes radios situées au-delà de 100 MHz et des moyens d'émission et de réception d'ondes radios situées en basse fréquence.

7. Dispositif selon la revendication 2, **CARACTÉRISÉ PAR LE FAIT QUE** ledit module (110) est équipé d'une antenne isotrope.

8. Procédé de communication d'un dispositif selon la revendication 5, **CARACTÉRISÉ EN CE QU'**il consiste à faire activer par le module électronique (110) ladite puce (200) afin que cette dernière communique avec le récepteur de radiofréquence (120) associé au châssis.

9. Procédé de communication d'un dispositif selon la revendication 1 du type de celui intégrant un module électronique (160) portable d'interrogation exploité par un utilisateur, **CARACTÉRISÉ EN CE QU'**il consiste sous la commande de l'utilisateur, à faire envoyer par le module portable (160), un signal au module électronique (110) de roue pour commander l'émission d'ondes d'activation de la puce (200) qui émet son identifiant.

## Patentansprüche

1. System zur Überwachung der Räder eines Fahrzeugs (c), wobei das System eine Kommunikationsvorrichtung umfasst, wobei die Vorrichtung ein elektronisches Modul und mindestens eines der Räder umfasst, wobei das Rad (R) mit einem Reifen ausgestattet ist, umfassend einen elektronischen Chip (200) und eine metallische Struktur (S), **dadurch gekennzeichnet, dass** das elektronische Modul (110) im Rad (R) des Fahrzeugs (C) angeordnet ist, wobei das elektronische Modul (110) Wellen (0) in einem festgesetzten Frequenzbereich aussendet, um die Reflexion der Wellen auf der metallischen Struktur (S) zu ermöglichen, so dass die Wellen (0) den Chip (200) unabhängig von seiner Position mit Bezug auf das Modul (110) erreichen können, so dass das Modul (110) mit dem Chip (200) zur Aktivierung und/oder Übertragung von Daten für zum Schreiben und/oder Lesen korrespondieren kann.

2. Vorrichtung nach Anspruch 1, **dadurch gekennzeichnet, dass** der Frequenzbereich jenseits von 100 MHz liegt.

3. Vorrichtung nach Anspruch 1, **dadurch gekennzeichnet, dass** der Chip (200) dynamische Messungen des Reifens durchführt, in den er implantiert ist.

4. Vorrichtung nach Anspruch 1, **dadurch gekennzeichnet, dass** der Chip (200) ein Funketikett ist.

5. Vorrichtung nach Anspruch 1, **dadurch gekennzeichnet, dass** sie einen Funkfrequenzempfänger (120) umfasst, der mit der Karosserie des Fahrzeugs (C) assoziiert ist.

6. Vorrichtung nach Anspruch 1, **dadurch gekennzeichnet, dass** das Modul (110) Mittel zum Senden und Empfangen von Funkwellen umfasst, die sich jenseits von 100 MHz befinden, und Mittel zum Senden und Empfangen von Funkwellen, die sich in Niederfrequenz befinden.

7. Vorrichtung nach Anspruch 2, **dadurch gekennzeichnet, dass** das Modul (110) mit einer isotropen Antenne ausgestattet ist.

8. Verfahren zur Kommunikation einer Vorrichtung nach Anspruch 5, **dadurch gekennzeichnet, dass** es darin besteht, durch das elektronische Modul (110) den Chip (200) aktiv zu machen, damit dieser mit dem Funkfrequenzempfänger (120) kommuniziert, der mit der Karosserie assoziiert ist.

9. Verfahren zur Kommunikation einer Vorrichtung nach Anspruch 1 vom Typ wie derjenigen, die ein tragbares elektronisches Modul (160) zur Abfrage integriert, das von einem Nutzer betrieben wird, **dadurch gekennzeichnet, dass** es, unter der Steuerung des Nutzers, darin besteht, durch das tragbare Modul (160) ein Signal an das elektronische Modul (110) des Rads zu senden, um die Sendung von Wellen zur Aktivierung des Chips (200) zu steuern, der seine Identifikation aussendet.

## Claims

1. System for monitoring the wheels of a vehicle (C), system comprising a communication device, said device comprising an electronic module and at least one of said wheels, said wheel (R) being equipped with a tire 5comprising an electronic chip (200) and a metal structure (S), **characterized by** the fact that said electronic module (110) is housed in the wheel (R) of the vehicle (C), said electronic module (110) transmitting waves (0) over a frequency range established so as to enable said 10waves to be reflected on the metal structure (S), so that said waves (0) can reach said chip (200) whatever the position thereof with respect to the module (110) so that the module (110) can correspond with the chip (200) for the purposes of activation and/or transmission of data 15 for writing and/or reading.

2. Device according to claim 1, **characterized by** the fact that said frequency range is situated beyond 100 MHz.

3. Device according to claim 1, **characterized by** the 20fact that said chip (200) makes dynamic measurements of the tire in which it is installed.

4. Device according to claim 1, **characterized by** the fact that said chip (200) is a radio label.

5. Device according to claim 1, **characterized by** the 25fact that it comprises a radio-frequency receiver (120) associated with the chassis of the vehicle (C).

6. Device according to claim 1, **characterized by** the fact that said module (110) comprises means for transmitting and receiving radio waves situated beyond 100 MHz and means for transmitting and receiving radio waves situated at low frequency.

7. Device according to claim 2, **characterized by** the fact that said module (110) is equipped with an isotropic 5antenna.

8. Communication method of a device according to claim 5, **characterized in that** it consists of causing the electronic module (110) to activate said chip (200) so that the latter communicates with the radio-frequency 10receiver (120) associated with the chassis.

9. Communication method of a device according to claim 1, of the type integrating a portable electronic interrogation module (160) used by a user, **characterized in that** it consists, under the control of the user, of 15causing the portable module (160) to send a signal to the electronic wheel module (110) in order to control the transmission of waves activating the chip (200), which transmits its identifier.
